# EUROPÄISCHE PATENTANMELDUNG

(11) **EP 1 610 173 A1**
(43) Veröffentlichungstag der Anmeldung: **28.12.2005**
(21) Anmeldenummer: 04014775.3
(22) Anmeldetag: 24.06.2004
(51) Int. Cl.: G02F 1/39

(54) **Lasersystem mit optisch-parametrischem Verstärker**

(71) Anmelder: High Q Laser Production GmbH, 6845 Hohenems (AT)
(72) Erfinder: Kopf, Daniel, Dr., 6844 Allach (AT); Lederer, Maximilian Josef, Dr., 6861 Alberschwende (AT)
(74) Vertreter: Kaminski, Susanne

(57) **Zusammenfassung**

In einem Lasersystem mit optisch-parametrischem Verstärker (8), einer Laserquelle (1) zur Erzeugung von Saatpulsen und einem wiederherstellbaren Verstärker (2) zur Erzeugung von Pumppulsen werden die Saatpulse der Laserquelle (1) sowohl in den wiederherstellbaren Verstärker (2) als auch den optisch-parametrische Verstärker (8) eingekoppelt. Zudem wird der im optisch-parametrischen Verstärker (8) erzeugte Hilfsstrahl (HS) durch eine Anordnung mit positiver Dispersion (14) geführt, so dass aufgrund des invertierten Chirps des Hilfsstrahls (HS) eine Rekompression des Pulses erfolgt. Dabei kann ein Pulsstrecker auch als Anordnung mit positiver Dispersion zur Rekompression des Hilfsstrahls (HS) genutzt werden, so dass auf eine weitere Komponente verzichtet werden kann.

## Beschreibung

Die Erfindung betrifft ein Lasersystem mit optischparametrischem Verstärker nach dem Oberbegriff des Anspruchs 1.

Häufige Anforderungen an Laser-Set-ups zur Erzeugung von Kurzzeit-Pulsen für industrielle wie wissenschaftliche Anwendungen sind zunehmend die Kompaktheit bzw. Einfachheit des Aufbaus sowie die Flexibilität bei der Strahlerzeugung, wie beispielsweise die Erzeugung spezieller Wellenlängen.

Da für Festkörperlaser die Zahl der direkt durch Laserprozesse erzeugbaren Wellenlängen durch die verwendbaren laseraktiven Medien vorgegeben ist, können durch nachgeschaltete Prozesse, bei denen die Wellenlänge des Laserlichtes verändert wird, auch andere spektrale Bereiche erschlossen werden. Ein Beispiel für solche Prozesse stellen optisch-parametrische Oszillatoren bzw. optisch-parametrische Verstärker dar.

Um eine schädigende Belastung des Verstärkermaterials durch hohe Intensitäten zu vermeiden, werden die zu verstärkenden Pulse zeitlich gestreckt. Ein hierfür geeigneter Ansatz ist die Verwendung des Chirped-Pulse-Amplifier-Konzepts, bei dem ein gechirpter Puls aufgrund des Durchgangs durch ein Material mit positiver Dispersion gestreckt wird. Der gestreckte Puls wird in einen Verstärker eingekoppelt und nach der Verstärkung wieder rekomprimiert. Zur Rekompression wird eine Strecke mit negativer Dispersion verwendet, die den gechirpten Puls zeitlich verkürzt. Hierfür geeignete Komponenten sind beispielsweise Prismenpaare oder dispersive Schichtstrukturen, wie z.B. Gires-Tournois-Interferometer.

Dabei müssen in herkömmlichen Chirped-Pulse-Verstärker die Pulse umsomehr gestreckt werden, je kleiner die Verstärkungsquerschnitte des Verstärkermediums sind. Deshalb kann es erforderlich werden, zur Erzielung der nötigen Pulsstreckung grosse diffraktive Gitter und Optiken zu verwenden, die durch lange Strecken getrennt sind, so dass eine in baulicher Hinsicht nachteilige Situation resultiert.

Demgegenüber folgt in einem optisch-parametrischen Verstärker die parametrische Verstärkung der Intensität des Pumppulses verzugslos. Für eine gegebene Pulsenergie und Pulsdauer können geeignete Werte für den Pumpstrahlbereich und die Länge des nichtlinearen Mediums gefunden werden, welche die parametrische Verstärkung von Hilfs- und Signalstrahl optimieren ohne die Intensitäten über die Schädigungsschwelle anwachsen zu lassen. Zur Erzielung einer effizienten parametrischen Verstärkung muß dabei ein räumlicher und zeitlicher Überlapp von Pump- und Saatpuls erfolgen.

Die Beschreibung eines Beispiels für einen optisch-parametrischen Verstärker, der in Kombination mit gechirpten Pulsen verwendet wird (OPCPA - optical parametric chirped pulse amplification), erfolgt in "Evaluation of a novel front end amplification technique for Vulcan" von J. Collier et al., CLF Annual Report 1997/98, Seiten 143-146. Eine theoretische Betrachtung der Bedingungen für OPCPA liefert Ross et al. In "An analysis and optimisation of optical parametric chirped pulse amplification", Central Laser Facility Annual Report 2000/2001, Seiten 181-183.

Die Auslegung und Optimierung von OPCPA-Systemen werden beispielsweise in "High-Conversion-Efficiency Optical Parametric Chirped-Pulse Amplification System Using Spatiotemporally Shaped Pump Pulses", LLE Review, Volume 93, Seiten 33-37 sowie in "Design of a Highly Stable, High-Conversion-Efficiency, Optical Parametric Chirped-Pulse Amplification System with Good Beam Quality", LLE Review, Volume 95, Seiten 167-178 beschrieben.

Im allgemeinen nutzen OPCPA-Systeme des Stands der Technik ein geeignetes nichtlineares Medium, wie z.B. Periodically Poled KTiOPO₄ (PPKTP) oder BaB₂O₄ (BBO), als Kern des optisch-parametrischen Verstärkers, in das Pumplicht, z.B. aus einem gütegeschalteten Nd:YLF- oder Nd:YAG-Laser, eingekoppelt wird. Zur Erhöhung der Spitzenleistung des Pumplichtes kommt dieses oft aus einem wiederherstellbaren ps-Verstärker, wobei dieser dann ebenfalls den Saatpuls aus einer eigenen Laserquelle nutzt.

Parallel zum Pumplicht erfolgt die Einkopplung eines Saatpulses, der zur Erzeugung von Hilfsstrahl und Signalstrahl führt. Dabei wird die Energie eines Photons des Pumpstrahls auf die zwei Photonen von Hilfs- und Signalstrahl aufgeteilt. Durch eine geeignete Wahl der Strahlparameter, wie z.B. spektrale Breite, Phase, Wellenlänge und Winkel von Pumppuls und Saatpuls, kann die erzeugte Wellenlänge beeinflusst werden.

Nach der Erzeugung von Hilfs- und Signalstrahl wird der als Laserlicht genutzte Anteil durch einen Pulskompressor komprimiert.

Lasersysteme nach dem OPCPA-Prinzip des Stands der Technik benötigen somit einen komplexen Aufbau, der insbesondere durch zwei Laserquellen zur Erzeugung von Saatpulsen und die Pulsstrecker- und Pulskompressor-Einheiten gekennzeichnet ist. Vor allem Pulskompressoren, die als Doppelprismenstrecken ausgebildet sind, erfordern grosse Abmessungen bzw. einen erhöhten Aufwand an Faltspiegeln.

Damit liegt der Erfindung die Aufgabe zugrunde, ein Lasersystem nach dem OPCPA-Prinzip bereitzustellen, das eine verringerte Komplexität aufweist.

Eine weitere Aufgabe liegt in der Verbesserung der Eigenschaften des generierten Pulses.

Diese Aufgaben werden erfindungsgemäss durch Ausführungsformen mit den Merkmalen des Anspruchs 1 oder der Merkmale von Unteransprüchen gelöst bzw. diese Lösungen weitergebildet.

Ein erfindungsgemässes Lasersystem nach dem OPCPA-Prinzip nutzt eine einzige Laserquelle zur Erzeugung von Saatpulsen für einen wiederherstellbaren Verstärker und für den optisch-parametrischen Verstärker. Ein weiteres vorteilhaftes Merkmal ist die Verwendung des Hilfsstrahls und dessen Rekomprimierung in einer Anordnung mit positiver Dispersion, insbesondere durch eine erneute Führung durch den Pulsstrecker.

Zur Erzeugung von Saatpulsen kann beispielsweise ein diodengepumpter Femtosekunden-Laser als Quelle genutzt werden, dessen Pulse in zwei Strahlgängen sowohl in einen wiederherstellbaren Verstärker als auch über einen Pulsstrecker und eine Verzögerungsstrecke zur Optimierung des zeitlichen Überlapps in den optisch-parametrischen Verstärker geführt werden. Dabei genügt es, wenn die Wellenlänge des Femtosekunden-Lasers nur teilweise mit dem Verstärkungsband des Lasermediums im wiederherstellbaren Verstärker überlappt. So kann ein Puls mit einer mittleren Wellenlänge von ca. 1060 nm und einer spektralen Breite von 12 nm verwendet werden, um das Verstärkungsband von Nd:YLF bei ca. 1047 nm in einem diodengepumpten wiederherstellbaren Verstärker zu nutzen. Typische, im Picosekundenbereich betriebene wiederherstellbare Verstärker können in Abhängigkeit von der Repetitionsrate frequenzverdoppelte Energien zwischen 0,1 und 1 mJ erreichen. Eine optimierte Effizienz des optisch-parametrischen Verstärkers von bis zu 30% erlaubt Femtosekunden-Pulse mit über 0,1 mJ und Streckungsfaktoren unterhalb von 50.

Zudem besitzen Picosekunden-Pumppulse den Vorteil, dass die Länge des nichtlinearen Mediums kurz gehalten werden kann, was die verfügbare nichtlineare Verstärkungsbandbreite für eine gegebene Pulsenergie optimiert.

Das vom wiederherstellbaren Verstärker generierte Pumplicht kann nachfolgend frequenzverdoppelt werden bevor es in den optisch-parametrischen Verstärker geführt wird. Saatpuls und Pumppuls werden in nicht-kollinearer Anordnung in den Verstärker eingekoppelt, so dass bei Nutzung des Hilfsstrahls dieser keinen von der Saatpuls-Quelle stammenden Hintergrund aufweist. Aufgrund des invertierten Chirps des im Verstärker generierten Hilfsstrahls kann dieser durch eine Anordnung mit positiver Dispersion wieder komprimiert werden, wobei alle Ordnungen konjugiert sind bzw. bleiben. Allerdings ist erfindungsgemäss auch eine Verwendung in kollinearer Anordnung möglich.

Eine vorteilhafte Möglichkeit ist hierbei die doppelte Nutzung des Pulsstreckers zur Streckung und nach der Verstärkung zur Kompression des Hilfsstrahlpulses. Eine solche Anordnung erlaubt den verzicht auf eine Komponente und damit die Reduzierung von Komplexität, Justageaufwand und Grösse des Lasersystems.

Eine Ab- oder Durchstimmbarkeit für einen gewissen Bereich ergibt sich durch die Verwendung von Weißlicht als Saatpuls des optisch-parametrischen Verstärkers. Hierfür wird ein Laserpuls der Femtosekunden-Laserquelle über eine geeignete Komponente, wie z.B. ein Saphir-Plättchen, eine photonische Faser oder eine sich verjüngende Faser (Tapered Fibre), geführt. Dabei kann diese Komponente zugleich die Eigenschaften eines Pulsstreckers aufweisen, so dass gegebenenfalls auf einen separaten Pulsstrecker verzichtet werden kann.

Das erfindungsgemässe Lasersystem wird nachfolgend anhand von in der Zeichnung schematisch dargestellten Ausführungsbeispielen rein beispielhaft näher beschrieben. Im einzelnen zeigen
- Fig.1: die schematische Darstellung eines ersten Ausführungsbeispiels des erfindungsgemässen Lasersystems;
- Fig.2: die schematische Darstellung eines zweiten Ausführungsbeispiels des erfindungsgemässen Lasersystems;
- Fig.3: die schematische Darstellung eines dritten Ausführungsbeispiels des erfindungsgemässen Lasersystems;

- Fig.4: die Darstellung eines Signalstrahl-Spektrums für das erste Ausführungsbeispiel;
- Fig.5: die Darstellung eines Hilfsstrahl-Spektrums für das erste Ausführungsbeispiel und
- Fig.6: die Darstellung des Zeitverlaufs der Autokorrelation des rekomprimierten Hilfsstrahls für das erste Ausführungsbeispiel.

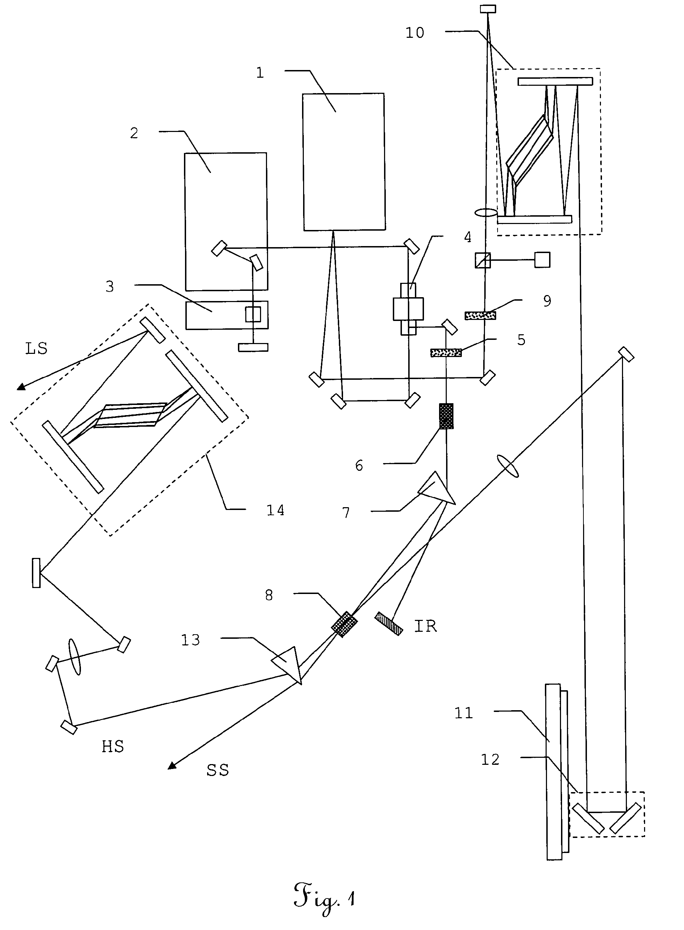

In Fig.1 wird ein erstes Ausführungsbeispiel des erfindungsgemässen Lasersystems schematisch dargestellt. In dem Lasersystem werden durch eine Laserquelle 1 Saatpulse, insbesondere als Femtosekunden-Laserpulse, erzeugt und über einen ersten Strahlgang in einen wiederherstellbaren Verstärker 2 zur Erzeugung von Pumppulsen, insbesondere als Picosekunden-Laserpulse, eingekoppelt. Als Laserquelle 1 kann beispielsweise ein Saat-Laser des Typs FemtoTrain IC-100 Femtosecond Nd:Glass der Fa. High-Q-Laser mit einer Wellenlänge von ca. 1060 nm zum Einsatz kommen. Dieser Laser erzeugt mit einer Rate von ca. 70 MHz Pulse von ca. 80 fs Dauer und einer Pulsenergie von ca. 0,5 nJ, wobei eine spektrale Breite von ca. 12 nm erreicht wird. Als Lasermedium des wiederherstellbaren Verstärkers 2 kann Nd:YLF verwendet werden, das ein schmales Verstärkungsband im Bereich um 1047 nm aufweist. Die Emission der Laserquelle 1 überlappt spektral mit dem Verstärkungsband des wiederherstellbaren Verstärkers 2, so dass eine Saatwirkung erreicht wird. Der wiederherstellbare Verstärker 2 wird in diesem Beispiel mit 1 kHz betrieben. Zur Ein- und Auskopplung von Laserpulsen in den wiederherstellbaren Verstärker 2 werden eine Pockels-Zelle 3 und ein erster Faraday-Isolator 4 verwendet.

Die Pumppulse werden nach Passieren eines Halbwellenlängenplättchens 5 in einem nichtlinearen Element 6, beispielsweise in einem BBO-Kristall, frequenzverdoppelt und über ein Quarz-Prisma 7, das zur Abtrennung des grünen Anteils vom IR-Anteil IR dient, auf einen optisch-parametrischen Verstärker 7 zur Erzeugung von Hilfs-Strahl HS und Signal-Strahl SS geführt. Dieser optisch-parametrische Verstärker 8 besteht in diesem Beispiel aus einem PPKTP-Kristall, welcher für eine Erzeugung der zweiten Harmonischen von 1047 nm auf 523,5 nm bzw. eine optisch-parametrische Verstärkung von 523,5 nm auf 1047 nm geeignet ist. Die Pulsenergie des grünen Anteils beträgt ca. 600 µJ bei einer Wiederholrate von 1 kHz.

Von der Laserquelle 1 werden Saatpulse über einen zweiten Strahlgang mit einem Viertelwellenlängenplättchen 9 auf einen Pulsstrecker 10 geführt. In diesem Beispiel weist der Pulsstrecker 10 als Komponente aus Material mit positiver Dispersion ein Element aus hochdispersivem SF57-Glas auf, wobei der Strahlgang zur Pulsstreckung mehrfach durch das Material geführt wird. Die Pulse werden damit in der Zeitdomäne von ca. 80 fs auf ca. 600 fs gestreckt.

Nach dem Pulsstrecker 10 werden die Pulse über eine mittels einer Schiene 11 und einem in der Schiene 11 geführten Retroreflektor 12 verstellbare Verzögerungsstrecke geführt. Durch diese Anordnung kann das zeitliche Aufeinandertreffen von Pumppulsen und Saatpulsen in dem optisch-parametrischen Verstärker 8 eingestellt werden. Insbesondere kann gewährleistet werden, dass Pumppulse und Saatpulse zum gleichen Zeitpunkt aufeinander treffen. Dabei treten die Saatpulse unter einem Winkel von ca. 0,5° gegenüber den Pumppulsen in den optisch-parametrischen Verstärker 8 ein, so dass ein Winkel-Multiplexing und eine nicht-kollineare Verstärkung resultieren. Für einen 1 mm langen PPKTP-Kristall des optisch-parametrischen Verstärkers 8 werden Energien des Hilfs-Strahls HS und des Signal-Strahls SS von jeweils bis zu 3 µJ gemessen, was einer parametrischen Verstärkung von ca. 6000 entspricht.

Nachfolgend wird der Signal-Strahl SS in einer hier nicht dargestellten Prismenstrecke aus in einem Abstand von 1,5 m plazierten SF10-Glas-Prismen rekomprimiert, wobei Signal-Strahl SS und verbleibender Saatpuls die gleiche Strahlachse besitzen.

Da der Chirp des Saatpulses im Hilfs-Strahl HS gespiegelt, d.h. spektral invertiert ist, kann eine Rekompression durch eine Anordnung mit positiver Dispersion erfolgen. In diesem ersten Ausführungsbeispiel wird der Hilfs-Strahl HS über ein Prisma 13 durch einen Pulskompressor 14 geführt und nachfolgend als Laserstrahl LS zur Nutzung ausgekoppelt. Der Pulskompressor 14 ist in dieser Variante mit zwei Spiegeln und einem Element aus SF57-Glas baugleich zum Pulsstrecker 10 ausgeführt. Alternativ können jedoch auch beliebige andere Anordnungen mit positiver Dispersion als Pulskompressor 14 genutzt werden.

Die Verwendung des Hilfsstrahls als Nutzstrahl sowie die verschiedenen Varianten der Rekompression können auch ohne die erfindungsgemässe Verwendung einer einzigen Saatpuls erzeugenden Quelle genutzt werden, d.h. der Hilfsstrahls ist mit der erfindungsgemäss realisierten Anordnung auch in gattungsgemäßen Laser-Systemen des Stands der Technik zur weiteren Nutzung auskoppelbar.

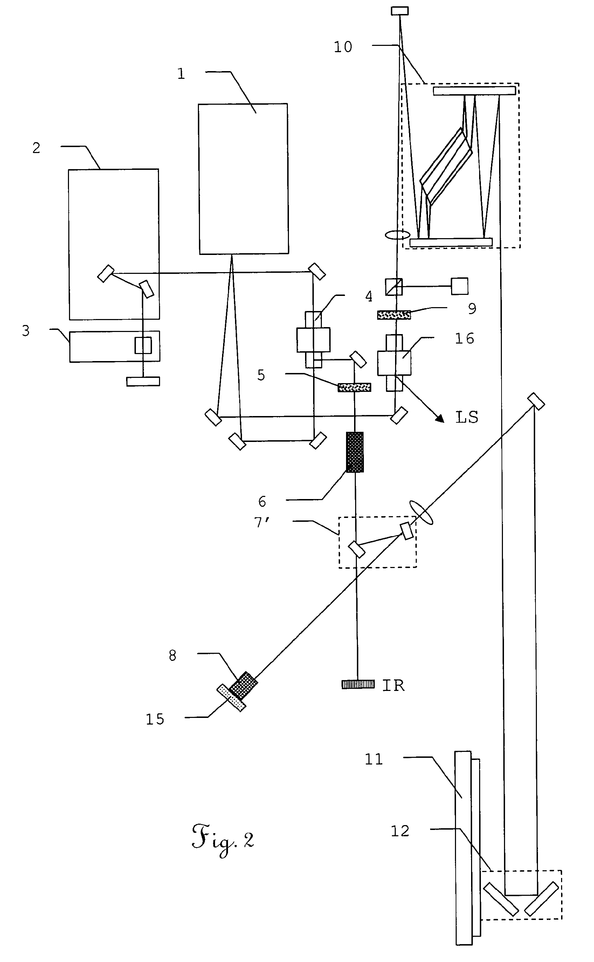

Fig.2 zeigt die schematische Darstellung eines zweiten Ausführungsbeispiels des erfindungsgemässen Lasersystems, bei dem auf einen Pulskompressor verzichtet wird. Auch in diesem Ausführungsbeispiel werden in einem zu Fig.1 ähnlichem Aufbau durch eine Laserquelle 1 Saatpulse erzeugt und in einen wiederherstellbaren Verstärker 2 zur Erzeugung von Pumppulsen eingekoppelt. Zur Ein- und Auskopplung von Laserpulsen in den wiederherstellbaren Verstärker 2 werden ebenfalls eine Pockels-Zelle 3 und ein erster Faraday-Isolator 4 verwendet.

Die Pumppulse werden nach Durchgang durch ein Halbwellenlängenplättchen 5 in einem nichtlinearen Element 6 frequenzverdoppelt und über ein Quarz-Prisma 7 auf den optisch-parametrischen Verstärker 8 geführt.

Von der Laserquelle 1 werden Saatpulse über einen zweiten Strahlgang mit einem Viertelwellenlängenplättchen 9 und einem zweiten Faraday-Isolator 16 auf einen Pulsstrecker 10 geführt. In diesem zweiten Ausführungsbeispiel weist der Pulsstrecker 10 ebenfalls ein Element aus hochdispersivem SF57-Glas auf, dem eine Verzögerungsstrecke mit Schiene 11 und Retroreflektor 12 nachgeschaltet ist. Die Saatpulse werden nach dem Durchgang durch die Verzögerungsstrecke über eine dichroitische Spiegelanordnung 7' in kollinearer Geometrie auf den optisch-parametrischen Verstärker 8 geführt, hinter dem sich ein reflektierendes Element 15 befindet, das Signal-, Hilfs- und Pumpstrahl wieder zurück reflektiert, so dass die Pulse des Hilfsstrahls über die Verzögerungsstrecke wieder auf den Pulsstrecker 10 geführt werden. Durch den im optisch-parametrischen Verstärker 8 zeitlich invertierten Chirp kann nun die positive Dispersion des Pulsstreckers 10 zur Rekompression genutzt werden. Durch diese erfindungsgemässe Anordnung kann ein- und dieselbe Komponente zur Pulsstreckung und nachfolgender Rekompression verwendet werden, so dass besonders kompakte Lasersysteme möglich sind.

Die mögliche Nutzung und Kompression des Signalstrahls ist in diesem Beispiel nicht explizit dargestellt. Diese kann aber auch wie in Fig.1 erläutert durch eine Prismenstrecke und nachfolgende Auskopplung erfolgen.

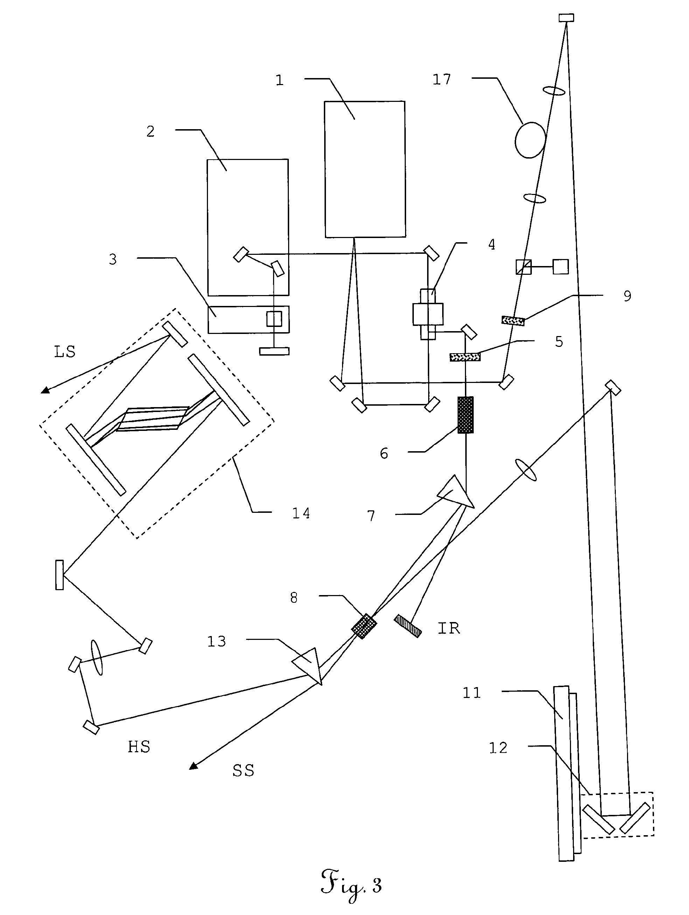

Fig.3 erläutert ein drittes Ausführungsbeispiel des erfindungsgemässen Lasersystems, bei der Weißlicht zur Saatpuls-Erzeugung verwendet wird. Komponenten und Strahlgang zur Erzeugung der Pumppulse bleiben in diesem dritten Ausführungsbeispiel gegenüber den ersten beiden unverändert, so dass auch hier durch eine Laserquelle 1 Saatpulse erzeugt und in einen wiederherstellbaren Verstärker 2 zur Erzeugung von Pumppulsen eingekoppelt werden. Diese Pumppulse werden nach Auskopplung über einen Faraday-Isolator 4 und Durchgang durch ein Halbwellenlängenplättchen 5 in einem nichtlinearen Element 6 frequenzverdoppelt und über ein Quarz-Prisma 7 auf den optisch-parametrischen Verstärker 8 geführt.

Zur Erzeugung eines Weisslicht-Saatpulses wird das Licht der Laserquelle 1 auf ein Element zur Erzeugung von Weisslicht geführt, das beispielsweise ein Saphir-Plättchen, eine photonische Kristallfaser oder eine sich verjüngende Faser (Tapered Fibre) sein kann. In dieser rein exemplarischen dritten Ausführungsform wird das Licht der Laserquelle 1 über ein Viertelwellenlängenplättchen 9 und entsprechende Linsen über eine Faser 17, z.B. eine photonische Kristallfaser, geführt. Durch diese Faser 17 erfolgt sowohl die Erzeugung von Weisslicht als auch die Pulsstreckung. Gegebenenfalls können jedoch auch weitere Komponenten zur Pulsstreckung, z.B. in zu Fig.1 bzw. Fig.2 ähnlicher Weise verwendet werden. Der Saatpuls durchläuft die Verzögerungstrecke mit Schiene 11 und Retroreflektor 12 und wird auf den optisch-parametrischen Verstärker 8 geführt. Aufgrund der spektralen Breite des Weißlicht-Saatpulses ist die Anordnung innerhalb gewisser Grenzen durchstimmbar, z.B. durch Variation der Winkel der Strahlgänge von Pump- und Saatpulsen oder durch Veränderung der Länge der Verzögerungsstrecke.

Nach der Erzeugung können Signalstrahl SS und Hilfsstrahl HS in Zu Fig.1 analoger Weise geführt werden. So kann der Signal-Strahl SS durch eine Prismenstrecke rekomprimiert und der Hilfsstrahl HS durch einen Pulskompressor 14 geführt und nachfolgend als Laserstrahl LS zur Nutzung ausgekoppelt werden. Neben der in Fig.3 schematisch dargestellten Ausführungsform des Pulskompressors 14 mit einem dispersiven Element sind auch andere Pulskompressorvarianten erfindungsgemäss realisierbar, z.B. eine Kombination von Gitter und Linse.

Fig.4 zeigt das Signalstrahl-Spektrum für das erste Ausführungsbeispiel. Die Degenerations-Wellenlänge des optisch-parametrischen Verstärkers von 1047 nm ist gekennzeichnet. Der Peak im Bereich dieser Wellenlänge stammt von Streulicht 19 des wiederherstellbaren Verstärkers. Auf der langwelligen Seite liegt der Peak des Signalstrahls 18 mit einem Maximum im Bereich von ca. 1060 nm.

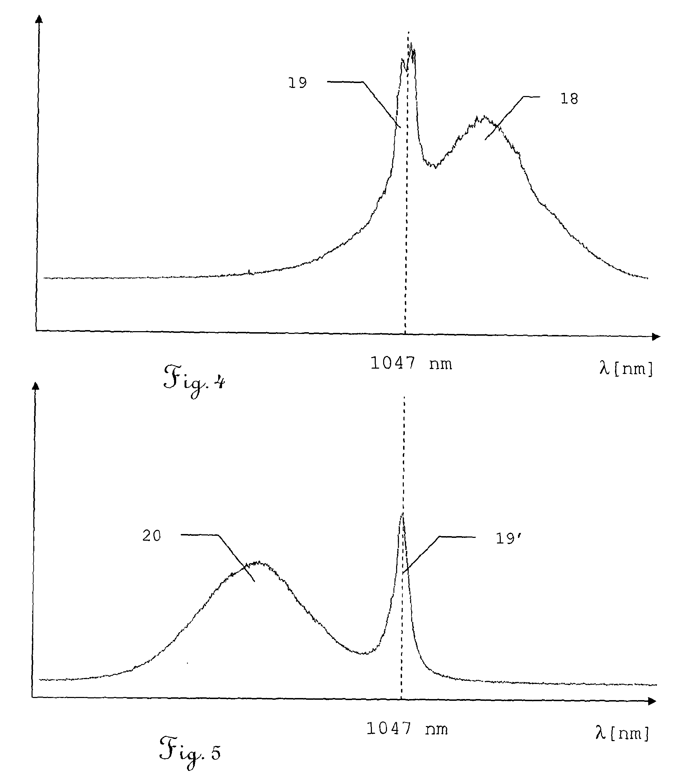

Fig.5 zeigt das Hilfsstrahl-Spektrum für das erste Ausführungsbeispiel. Im Vergleich zur Lage des Signalstrahl-Peaks aus Fig.4 ist die Lage des Hilfsstrahl-Peaks 20 gegenüber der Wellenlänge von 1047 nm gespiegelt, so dass das Maximum im Bereich von ca. 1030 nm liegt. Bei 1047 nm ist der vom wiederherstellbaren Verstärker stammende Streulicht-Anteil 19' zu erkennen.

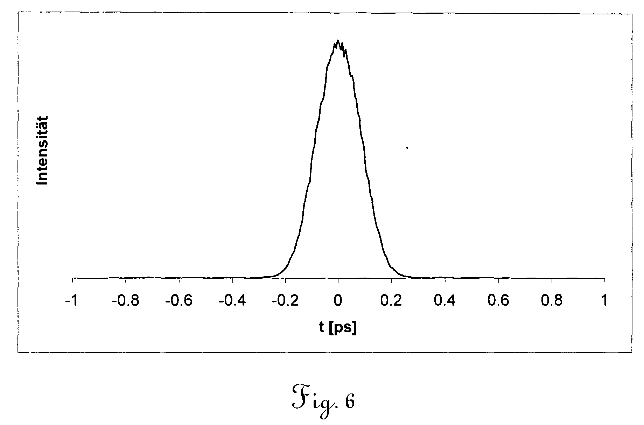

In Fig.6 erfolgt die Darstellung des Zeitverlaufs der Autokorrelation für den rekomprimierten Hilfsstrahl eines Lasersystems nach dem ersten Ausführungsbeispiel. Nach der Streckung der Saatpulse von ca. 80 fs auf eine Halbwertsbreite von ca. 600 fs werden die Pulse des Hilfsstrahls nach einem Durchgang durch SF57-Material auf eine Halbwertsbreite von ca. 135 fs rekomprimiert, wobei die gleiche Weglänge verwendet wird.

Aus Vereinfachungsgründen wurden in den Fig.1-3 einige Komponenten, wie z.B. Linsen, nicht dargestellt.

Die dargestellten Ausführungsbeispiele stellen keine abschliessende Aufzählung von Ausgestaltungsmöglichkeiten dar. Insbesondere können einzelne Merkmale verschiedener Ausführungsbeispiele miteinander kombiniert oder durch weitere Komponenten oder Anordnungen ergänzt werden. Die dargestellte nicht-kollineare Anordnung des optisch-parametrischen Oszillators bzw. Verstärkers kann dabei in an sich bekannter Weise hinsichtlich der Parameter modifiziert werden. So kann beispielsweise das erfindungsgemässe Konzept grundsätzlich auch für kollineare Anordnungen verwendet werden. Auch können mehrere PPKTP-Kristalle in einem optisch-parametrischen Oszillator hintereinander geschaltet werden oder aber es kann z.B. die Geometrie der einzelnen Kristalle verändert werden.

## Patentansprüche

1. Lasersystem mit
- einer Laserquelle (1) zur Erzeugung von Saatpulsen, insbesondere als Femtosekunden-Laserpulse,
- einem wiederherstellbaren Verstärker (2) zur Erzeugung von Pumppulsen, insbesondere als Picosekunden-Laserpulse,
- einem optisch-parametrischen Verstärker (8) zur Erzeugung von Hilfs-Strahl (HS) und Signal-Strahl (SS),
wobei der optisch-parametrische Verstärker (8) durch den wiederherstellbaren Verstärker (2) gepumpt wird,
**dadurch gekennzeichnet, dass**
die Saatpulse in
- den wiederherstellbaren Verstärker (2) und
- den optisch-parametrische Verstärker (8), insbesondere über einen Pulsstrecker (10), eingekoppelt werden.

2. Lasersystem nach Anspruch 1,
**dadurch gekennzeichnet, daß**
der Hilfs-Strahl (HS) über eine Anordnung mit positiver Dispersion (10,14) geführt wird.

3. Lasersystem nach Anspruch 2,
**dadurch gekennzeichnet, daß**
der Hilfs-Strahl (HS) über den Pulsstrecker (10) geführt wird.

4. Lasersystem nach einem der vorangehenden Ansprüche,
**dadurch gekennzeichnet, daß**
der Pulsstrecker (10) wenigstens eine Komponente aus Material mit positiver Dispersion aufweist, wobei ein Strahlgang zur Pulsstreckung mehrfach durch das Material geführt ist.

5. Lasersystem nach einem der vorangehenden Ansprüche,
**dadurch gekennzeichnet, daß**
der Signal-Strahl (SS) über eine Anordnung mit negativer Dispersion geführt wird, insbesondere über eine Doppelprismenstrecke.

6. Lasersystem nach einem der vorangehenden Ansprüche,
**dadurch gekennzeichnet, daß**
die Saatpulse in den optisch-parametrischen Verstärker (8) in nicht-kollinearer Anordnung eingekoppelt werden.

7. Lasersystem nach einem der vorangehenden Ansprüche,
**dadurch gekennzeichnet, daß**
die Pumppulse frequenzvervielfacht, insbesondere frequenzverdoppelt, sind.

8. Lasersystem nach einem der vorangehenden Ansprüche,
**dadurch gekennzeichnet, daß**
der wiederherstellbare Verstärker (2) Nd:YLF als Lasermedium aufweist.

9. Lasersystem nach einem der vorangehenden Ansprüche,
**dadurch gekennzeichnet, daß** die Laserquelle (1) zur Erzeugung von Weißlicht ausgebildet ist, insbesondere durch eine nachgeschaltete Saphir-Platte, eine photonische Kristallfaser oder eine sich verjüngende Faser.

10. Lasersystem nach Anspruch 9,
**dadurch gekennzeichnet, daß** der Pulsstrecker als Faser (17) ausgebildet ist, insbesondere als photonische Kristallfaser oder sich verjüngende Faser.
